## Europäisches Patentamt

## European Patent Office

## Office européen des brevets

(11) Veröffentlichungsnummer: **0 057 769**

**A1**

(12) # EUROPÄISCHE PATENTANMELDUNG

(21) Anmeldenummer: **81110298.7**

(22) Anmeldetag: **10.12.81**

(51) Int. Cl.³: **G 01 N 15/07**

(30) Priorität: **31.12.80 DE 3049565**

(43) Veröffentlichungstag der Anmeldung:
**18.08.82 Patentblatt 82/33**

(84) Benannte Vertragsstaaten:
**AT BE CH DE FR GB IT LI LU NL SE**

(71) Anmelder: **Max-Planck-Gesellschaft zur Förderung der Wissenschaften e.V.**
**Bunsenstrasse 10**
**D-3400 Göttingen(DE)**

(72) Erfinder: **Kachel, Volker, Dr.-Ing.**
**Allingerstrasse 25**
**D-8039 Puchheim(DE)**

(72) Erfinder: **Glossner, Ewald**
**Ringstrasse 16**
**D-8051 Mandlstadt(DE)**

(74) Vertreter: **Dreiss, Uwe, Dr. jur. Dipl.-Ing. M.Sc. et al,**
**Patentanwälte Dreiss, Hosenthien & Fuhlendorf**
**Gerokstrasse 6**
**D-7000 Stuttgart 1(DE)**

(54) **Messkammer für Partikelsuspensionseigenschaften im Durchflussverfahren.**

(57) Es wird eine Meßkammer zur Messung bestimmter Eigenschaften von in einer Partikelsuspension suspendierten Partikeln nach dem sog. "Coulter"-Prinzip beschrieben. Die Partikelsuspension wird kurz vor einer Meßstelle innerhalb einer Strömungskammer in den sich zur Meßstelle hin im Strömungsquerschnitt verjüngenden Hüllstrom einer Transportflüssigkeit eingebracht. Dabei wird die Strömungskammer durch einen Passteil gebildet, der einen offenen Durchgang aufweist. In diesen Durchgang wird abdichtend ein die Partikelsuspension aufnehmendes Reaktionsgefäß eingesetzt, das auf einer Unterseite eine Öffnung aufweist, aus der die Partikelsuspension direkt in den Hüllstrom eintritt.

FIG.1

<u>Beschreibung</u>

Die Erfindung betrifft eine Meßkammer zur Messung bestimmter
Eigenschaften von in einer Partikelsuspension suspendierten
Partikeln im Durchflußverfahren, bei der die Partikelsuspension
kurz vor einer Meßstelle innerhalb einer Strömungskammer in
den sich zur Meßstelle hin im Strömungsquerschnitt verjüngenden
Hüllstrom einer Transportflüssigkeit eingebracht wird.

Derartige Meßkammern sind bekannt und zwar sowohl als Meßkammern nach dem "Coulter"-Prinzip (DE-OS 24 22 129) als auch
als Meßkammern, die nach anderen Verfahren arbeiten (vgl. z.B.
Myron R. Melamed et al (ed.), Flow Cytometry and Sorting,
Wiley Medical 1979, S. 646, 647, 655, 670, 683, 691).

Bei diesen bekannten Meßkammern erfolgt die Zuführung von
Partikelsuspension in den Hüllstrom vor der Meßöffnung bzw.
Meßstelle durch eine ortsfest eingebaute Zuführungskapillare,
deren Austrittsöffnung sich kurz vor der Meßöffnung befindet.
Die Austrittsöffnung befindet sich meist an einer Stelle, an
der bereits eine Querschnittsverengung des Hüllstroms eintritt
(Fokussierung). Die Zuführung der Partikelsuspension zu diesen
fest eingebauten Zuführungskapillaren erfolgt z.B. durch
direktes Einpipettieren oder durch das Aufsetzen eines Behälters in einem Paßteil oberhalb der Zuführungskapillare; von
diesem Behälter läuft die Partikelsuspension über Verbindungselemente in die Zuführungskapillare und von dieser dann in den
Hüllstrom vor der Meßstelle oder Meßöffnung.

Dies hat gewisse Nachteile. Zunächst besteht das Problem der
Verunreinigung und der Reinigungsbedürftigkeit der Zuführungskapillare und der Verbindungselemente zwischen dem Einsatz
verschiedener Proben. Dazu ist oft eine gewisse Demontage der Meßkammer erforderlich oder man muß mit Spülflüssigkeiten spülen. Außerdem kann es sein, daß die Austrittsöffnung der Zuführungskapillare verstopft oder verklebt ist, was oft den Meßvorgang noch dadurch kompliziert, daß das nicht leicht feststellbar ist.

Ferner ergibt sich ein gewisser zeitlicher Abstand zwischen dem Moment, in dem die Partikelsuspension in den Behälter, der auf die Meßkammer aufgesetzt wird, eingebracht wird und zu dem Zeitpunkt, in dem die einzelnen Partikel die Meßstelle durchtreten. Es kann daher vorkommen, daß erst eine Minute nach Einbringen der Partikelsuspension die Partikel die Meßstelle zu durchtreten beginnen. Das behindert sehr die Messung bei neuen Meßproblemen, so wenn man verschiedene Parameter (Volumen, Absorption, Fluoreszenzen u.a.) in ihrer zeitlichen Veränderung messen will. Dabei käme es vielmehr darauf an, die Parameter zu einem bestimmten Zeitpunkt innerhalb des zeitlichen Ablaufs einer Reaktion oder einer (allgemein ausgedrückt) Veränderung der Partikel zu bestimmen. Dies ist besonders bei Enzymreaktionen etc. wichtig.

Der Erfindung liegt die Aufgabe zugrunde, eine Meßkammer zu schaffen, bei der eine möglichst unmittelbare Übernahme der Partikel einer Partikelsuspension, in der irgendwelche Reaktionen ablaufen, möglichst unmittelbar in die Meßöffnung oder Meßstelle, und zwar ohne die beschriebene zeitliche Verzögerung, erfolgt.

Erfindungsgemäß wird diese Aufgabe dadurch gelöst, daß die Strömungskammer einen Paß mit einem offenen Durchgang aufweist, in den abdichtend ein die Partikelsuspension aufnehmendes Reaktionsgefäß eingesetzt ist, dessen Einsetztiefe durch eine Anlagefläche des Paßteils bestimmt wird und das auf einer Unterseite eine Öffnung aufweist, aus der die Partikelsuspension in den Hüllstrom eintritt.

Gemäß der Erfindung wird ein Reaktionsgefäß direkt in die Strömungskammer in einer durch die Anlagefläche genau definierte Position eingesetzt. Es handelt sich dabei um an sich bekannte Reaktionsgefäße, die lediglich auf der Unterseite mit einer Öffnung (einem Loch von z.B. 100 µ Durchmesser) versehen werden müssen. Ist eine Druckdifferenz gegeben zwischen der Strömungskammer, in die dann der untere Teil des Reaktionsgefäßes hineinragt und dem Reaktionsgefäß selbst, so erfolgt ein Austritt der Partikelsuspension direkt in die Meßstelle bzw. Meßöffnung. Es ist somit möglich, exakt an beliebigen Zeitpunkten einer in dem Reaktionsgefäß stattfindenden Reaktion auf einem äußerst kurzen Weg von nur wenigen Millimetern die Partikel an die Meßstelle zu bringen.

Gleichzeitig ist damit das Problem der Verunreinigung gelöst, da als Reaktionsgefäße an sich bekannte im Handel erhältliche Einwegartikel verwendet werden können.

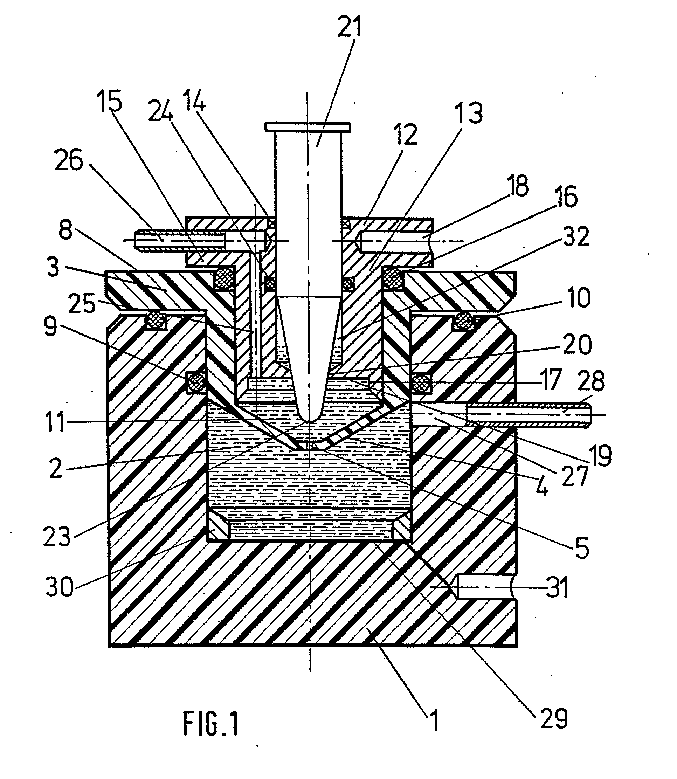

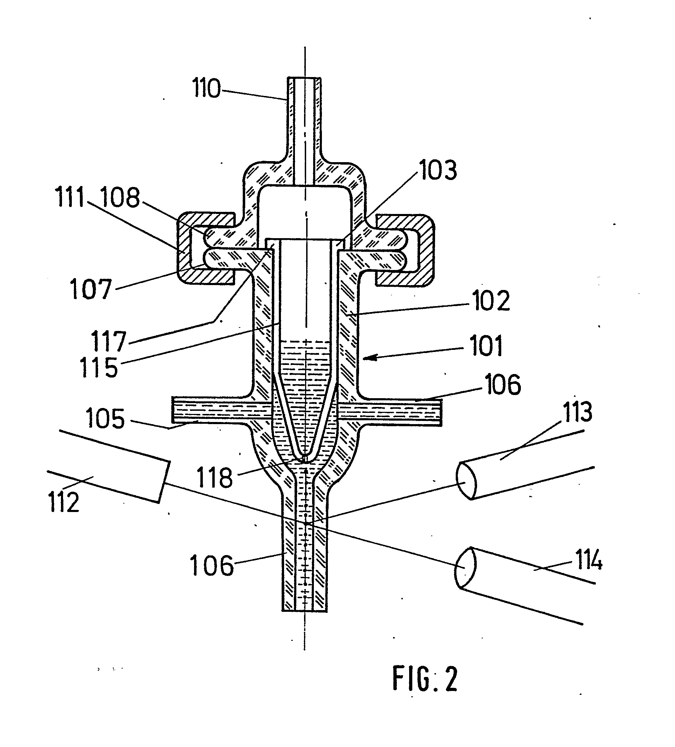

Die Erfindung wird im folgenden anhand der beigefügten Zeichnungen beschrieben. Figur 1 zeigt ein erstes, Figur 2 ein zweites Ausführungsbeispiel.

Das Ausführungsbeispiel betrifft eine Meßkammer nach dem "Coulter"-Prinzip. Die Meßkammer weist einen Unterteil 1 mit einem Innenraum 2 auf. In den Innenraum 2 ist ein topfförmiger Einsatzteil 3 eingesteckt. Die Unterseite 4 verjüngt sich kegelig. Am tiefsten Punkt weist der Einsatzteil 3 eine Meßöffnung 5 auf. Der Einsatzteil 3 weist einen breiten Rand 8 auf, mit dem er auf der Oberseite des Unterteils 1 aufsitzt. Die Abdichtung erfolgt durch O-Ringe 9, 10.

Der Unterteil 1 sowie der Einsatzteil 3 sind aus isolierendem Kunststoff. Der Innenraum 11 des ebenfalls topfförmigen Einsatzteils 3 bildet die Strömungskammer; in sie ist ein Einsatzkörper 12 eingesetzt, der durch einen metallischen Ringteil 13 und einem Gefäßaufnahmeteil 14 gebildet wird. Der metallische Ringteil weist einen Rand 15 auf, mit dem er auf der Oberseite des Randes 8 aufsitzt. Die Abdichtung erfolgt durch O-Ring 16. An seinem unteren Ende ist der metallische Ringteil 13 als dünne Manschette 17 ausgebildet, die einen Teil der Wandung des topfförmigen Innenraums 11 bildet und als Elektrode für die "Coulter"-Messung dient. Der elektrische Anschluß erfolgt über die Buchse 18. Der Gefäßaufnahmeteil 14 ist der genannte Paßteil. Er ist zylindrisch. Auf seiner Unterseite hat er einen senkrecht zur Außenwand verlaufenden Rand 13, der mit einer Öffnung 20 versehen ist. Im zylindrischen Innenraum des Gefäßaufnahmeteils 14 steckt ein Reaktionsgefäß 21. Dabei handelt es sich um ein im Handel erhältliches bekanntes Gefäß, das insbesondere dadurch gekennzeichnet ist, daß es sich nach unten konisch verjüngt. Der sich konisch verjüngende Unterteil 22 sitzt auf der Öffnung 20 auf, so daß durch die Öffnung 20 eine Anlagefläche gebildet wird, die die Einstecktiefe des Reaktionsgefäßes 21 in dem Gefäßaufnahmeteil 14 definiert.

Das Reaktionsgefäß 21 ist auf seiner Unterseite mit einer Öffnung 23 versehen. Eine solche Öffnung weist dieses Reaktionsgefäß in seiner im Handel erhältlichen Form nicht auf. Die Anbringung ist jedoch unproblematisch. Der Durchmesser der Öffnung 23 kann ca. 100 μ betragen. Die Öffnung 23 dient zum Austritt von Partikelsuspension aus dem Inneren des Reaktionsgefäßes 21 in die Strömungskammer 3, 11. - Die Abdichtung zwischen Reaktionsgefäß 21 und Gefäßaufnahmeteil 14 erfolgt durch O-Ring 24.

Durch den metallischen Ringteil 13 und den unteren Rand 19 des Gefäßaufnahmeteils 14 hindurch erstreckt sich ein Kanal 25, durch den eine Verbindung von dem Innenraum 11 zu einem Rohranschlußstück 26 geschaffen wird. Ein zweiter Kanal 27 verbindet den Innenraum der Innenbohrung 2 mit einem Anschlußkanal 28.

Auf dem Boden des Innenraumes 2 des Unterteils 1 ist eine flächenförmige zweite Elektrode 29 angeordnet, die durch einen Anpressring 30 gehalten wird. Die Elektrode 29 ist durch eine elektrische Leitung mit der Buchse 31 verbunden.

Im Betrieb ist das Rohranschlußstück 26 mit einem (nicht gezeigten) Vorratsbehälter (siehe DE-OS 24 62 063) eines Elektrolyten verbunden, der unter einem Druck $p_1$ steht, welcher niedriger ist als der atmosphärische Außendruck. Dieser Druck herrscht auch in der Strömungskammer 3, 11. Am Anschlußkanal 28 wird der Elektrolyt abgesaugt. Dort herrscht also ein noch niedrigerer Druck. Der Elektrolyt fließt also durch das Rohranschlußstück 26 in den Innenraum 11 des Einsatzkörpers 12, von dort über die Meßöffnung 7 in den Innenraum 2 des Unterteils 1, aus welchem er über Kanal 27 und Anschlußkanal 28 abgesaugt wird. - Zwischen den beiden Elektroden 17 und 29 liegt eine bestimmte Spannung an. Befindet sich nun Partikelsuspension im Reaktionsgefäß 21, so wird diese infolge der Druckdifferenz zwischen atmosphärischem Druck im Reaktionsgefäß 21 und dem Druck $p_1$ von der auf die Meßöffnung 7 hinlaufenden Strömung des Elektrolyten mitgenommen. Dadurch werden die Partikel fokussiert und durch die Meßöffnung 7 hindurchgeführt. Während dieses Durchtritts entsteht in bekannter Weise zwischen den beiden Elektroden 17 und 19 (bei eingeprägtem Strom) ein Spannungsimpuls, dessen Höhe ein Maß für das Volumen des Partikels darstellt.

In der gezeigten Weise ist es bei der Erfindung nun besonders vorteilhaft, daß ein bekanntes Reaktionsgefäß 21 direkt so in den Gefäßaufnahmeteil (Paßteil) eingesetzt werden kann, daß die Partikel, die sich in dem Reaktionsgefäß befinden, direkt aus diesem einer Messung in der Meßöffnung zugeführt werden können, wobei der räumliche Abstand und damit auch der Zeitversatz äußerst gering ist.

Es wird also damit möglich, die Ergebnisse von Reaktionen in dem Reaktionsgefäß 21 ohne weitere Handhabung zu jedem beliebigen Zeitpunkt in jeder beliebigen Phase der Messung zuzuführen. Dieser Zeitpunkt wird dadurch bestimmt, daß der Druck $p_1$ in der Strömungskammer 3, 11 abgesenkt wird. Dann tritt die Partikelsuspension aus dem Reaktionsgefäß 21 durch die Öffnung 23 aus.

Man kann auch den Boden des Unterteils transparent machen bzw. ein Fenster einsetzen, durch das der Austritt der Partikel aus der Meßöffnung beobachtet werden und dementsprechend weitere Parameter von unten her gemessen werden können.

Das zweite Ausführungsbeispiel zeigt die Anwendung der Erfindung bei sog. Durchflußzytometern, d.h. bei Meßkammern der im Oberbegriff des Patentanspruches genannten Art, die nicht notwendigerweise gleichzeitig eine Messung nach dem "Coulter"-Prinzip durchführen.

Die dort gezeigte Meßkammer wird durch einen Glaskörper 101 gebildet, der in seinem oberen Bereich als zylindrischer Paßteil für ein Reaktionsgefäß bzw. einen Suspensionsbehälter 103 ausgebildet ist. Der zylindrische Paßteil 102 weist für die partikelfreie Transportflüssigkeit zwei Zuflußanschlüsse 104 und 105 auf und verjüngt sich nach unten hin, wo er in einen Abflußanschluß 106 übergeht.

Auf dem oberen Flansch 107 sitzt eine Kappe 109, die ebenfalls mit einem Flansch, nämlich dem Flansch 108 versehen ist. Die Kappe 109 ist mit einem Druckanschluß 110 versehen. Die beiden Flansche 107 und 108 werden durch eine Halteklammer 111 zusammengehalten.

Außerhalb des langgestreckten Abflußanschlusses 106 ist
als Lichtquelle eine Laserkanone 112 angeordnet, deren
Lichtstrahl auf den Partikelstromfaden im Abflußanschluß 106
gerichtet ist. Mit der Foto-Vervielfacher-Röhre 113 wird
bspw. Fluoreszenz, mit der Foto-Vervielfacher-Röhre wird
bspw. die Absorption des Lichtstrahles oder das Streulicht
(Scatter) gemessen.

Auch hier ist der Paßteil 102 so ausgebildet, daß er einen
inneren Durchgang aufweist, nämlich den Durchgang 115, in
den das Reaktionsgefäß 103 genau abdichtend eingepasst
werden kann. Der Anschlag, der die Einsetztiefe bestimmt,
wird durch den Innenbereich 117 des Flansches 107 gebildet.
Entsprechend ist die Länge des Paßteiles 102 auf die Länge
des Reaktionsgefäßes abgestimmt, damit sich die Austrittsöffnung 118 innerhalb des Paßteiles 102 sich bereits in den
sich verjüngenden unteren Teil kurz vor dem Abflußanschluß
106 befindet. Damit ist auch hier eine hydrodynamische
Fokussierung gegeben, die dazu dient, die aus der Austrittsöffnung 118 austretenden Partikel zu beschleunigen und damit
einzeln nacheinander durch die Meßöffnung zu transportieren.
Die Druckkappe 109 bzw. der Druckanschluß 110 dienen dazu,
im Reaktionsgefäß 103 einen gewissen Überdruck zu erzeugen,
der erforderlich ist, um einen Austritt der Partikelsuspension, die sich in dem Reaktionsgefäß 103 befindet, aus
diesem zu bewirken.

In den beschriebenen Ausführungsbeispielen wurden die beiden
Paßteile, nämlich der Gefäßaufnahmeteil 114 im ersten Ausführungsbeispiel und der Paßteil 102 so beschrieben, daß sie
zur Aufnahme zylindrischer Reaktionsgefäße geeignet sind.
Man kann aber selbstverständlich auch Reaktionsgefäße mit anderen Querschnitten, z.B. im Querschnitt quadratische oder rechteckige Küvetten einsetzen. Es ist dann lediglich erforderlich, die Durchgänge in der Meßkammer, d.h. im Ausführungsbeispiel nach Figur 1 den zylindrischen Durchgang 32 und im Ausführungsbeispiel nach Figur 2 den Durchgang 115 mit einem entsprechenden Querschnitt auszubilden und entweder - wie im Ausführungsbeispiel nach Figur 1 - eine Abdichtung in Form von O-Ringen vorzusehen oder aber wie im Ausführungsbeispiel nach Figur 2 eine Abdichtung durch den engen Sitz des elastischen Reaktionsgefäßes in dem Durchgang zu erzielen, wobei man zusätzlich noch Mittel vorsehen kann, um den oberen Rand des Reaktionsgefäßes gegen den Anschlag 117 zu drücken.

- 'Ende der Beschreibung -

# DREISS, HOSENTHIEN & FUHLENDORF

**PATENTANWÄLTE**

Beim Europäischen Patentamt zugelassene Vertreter
European Patent Attorneys

HANS LANGOSCH
Dipl.-Ing. (1963 - 1981)
UWE DREISS
Dr. jur., Dipl.-Ing., M. Sc.
HEINZ HOSENTHIEN
Dr.-Ing., Dipl.-Ing.
JÖRN FUHLENDORF
Dipl.-Ing.

D-7000 STUTTGART 1
GEROKSTRASSE 6
TF (07 11) 24 57 34/44
TG IDEAPAT
TX 7-22 247 idea d

0 0 5 7 7 6 9

[P] für Besucher

DREISS, HOSENTHIEN & FUHLENDORF, D-7000 STUTTGART 1

Anmelder:

Max-Planck-Gesellschaft
zur Förderung der Wissenschaften
e.V.
Bunsenstraße 10

3400  Göttingen

| Amtl. Akt. Z.<br>Off. Ser. No. | Ihr Zeichen<br>Your Ref. | Unser Zeichen<br>Our Ref.<br>2720 001 | Datum<br>Date<br>9.12.1981  D/so |
|---|---|---|---|

Titel: Meßkammer


## Patentanspruch


Meßkammer zur Messung bestimmter Eigenschaften von in einer
Partikelsuspension suspendierten Partikeln im Durchflußverfahren, bei der die Partikelsuspension kurz vor einer Meßstelle innerhalb einer Strömungskammer in den sich zur Meßstelle hin im Strömungsquerschnitt verjüngenden Hüllstrom
einer Transportflüssigkeit eingebracht wird, dadurch gekennzeichnet, daß die Strömungskammer (3, 11; 107) einen Paßteil
(14, 102) mit einem offenen Durchgang (32, 115) aufweist, in
den abdichtend ein die Partikelsuspension aufnehmendes Reaktionsgefäß (21, 103) eingesetzt ist, dessen Einsetztiefe
durch eine Anlagefläche (20, 117) des Paßteils (14, 102) bestimmt wird und das auf einer Unterseite eine Öffnung (23, 118)
aufweist, aus der die Partikelsuspension in den Hüllstrom
eintritt.

Dresdner Bank Stuttgart 1919854 (BLZ 600 800 00), Postscheckkonto Stuttgart 507 71-705

FIG.1

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A,D | DE-A-2 462 063 (MAX PLANCK GES.)<br>* Seiten 14-17; Figur 2 *<br>---<br> | 1 | G 01 N 15/07 |
| A | US-A-3 395 343 (C. MORGAN et al.)<br>* Spalte 4, Figur 1 *<br>----- | 1 | |

RECHERCHIERTE SACHGEBIETE (Int. Cl. ³)

G 01 N 15/07

Der vorliegende Recherchenbericht wurde für alle Patentansprüche erstellt.

| Recherchenort<br>DEN HAAG | Abschlußdatum der Recherche<br>22-04-1982 | Prüfer<br>BOEHM CH.E.D. |
|---|---|---|